Europäisches Patentamt

European Patent Office

Office européen des brevets

(19)

(11) **EP 0 559 353 B1**

(12) **EUROPEAN PATENT SPECIFICATION**

(45) Date of publication and mention
of the grant of the patent:
**16.08.2001 Bulletin 2001/33**

(51) Int Cl.⁷: **G06F 3/033**, G06K 9/22

(21) Application number: **93301158.7**

(22) Date of filing: **17.02.1993**

(54) **Computer input apparatus and method for drawing free curves**

Rechnereingabevorrichtung und Methode für Freihandzeichungen

Dispositif et méthode d'entrée pour ordinateur de dessins à main levée

(84) Designated Contracting States:
**DE FR GB**

(30) Priority: **05.03.1992 JP 4828792**

(43) Date of publication of application:
**08.09.1993 Bulletin 1993/36**

(73) Proprietor: **International Business Machines
Corporation
Armonk, N.Y. 10504 (US)**

(72) Inventor: **Minakata, Hiroshi
Tokyo (JP)**

(74) Representative: **Burt, Roger James, Dr.
IBM United Kingdom Limited
Intellectual Property Department
Hursley Park
Winchester Hampshire SO21 2JN (GB)**

(56) References cited:
**EP-A- 0 377 129        US-A- 5 077 802**

EP 0 559 353 B1

**Description**

The invention relates to computer input apparatus.

The importance of handwriting graphical input systems for computers by a pen input interface has been increasing as cost reduction and high resolution have been accomplished for liquid crystal displays. The conventional handwriting input systems are generally classified into those of the batch processing type and the interactive processing type. The batch processing type are suitable for flowcharts and wiring diagrams, in which preprocessing is applied to drawings written on paper to recognize topology of line segments. The interactive processing type are suitable for recognizing figures, but the line drawings which can be input are structurally limited to segments of sizes allowing them to be cut out. That is, input is performed by writing with one stroke of a primitive unit, and recognition is by matching with a basic figure such as a square, circle or character. For example, the methods described in Kojima, et al., "On-line Handwriting Figure Recognition by the Adjacent Segments Structural Analysis Method," Information Articles Journal, Aug. 1987 and in the published Japanese Patent Application JP2226387.

When a free curve is input, it is difficult for the user to input the whole curve at one time. It is natural for the user to finish by repeatedly drawing short line segments and repeating using trial and error in the same way as a designer sketches. Therefore, to draw a free curve, an input method which involves connecting short line segments as when drawing it on paper is needed.

As cost reduction and high resolution are proceeded in future for a tablet with a liquid crystal display, an interactive sketch-like graphical input system by pen input will be distributed as a new application. In such an application, the above described input methods involving short line segments for drawing in a sketch style will be important. It is known to generate a curve consisting of short line segments, using the following parabolic blending technique. A. W. Overhauser, "Analytic Definition of Curves and Surfaces by Parabolic Blending," Technical Report No. SL 68-40, Ford Motor Company Scientific Laboratory, May 8 (1968).

In this, the number of objective points is limited according to the degrees of parabolas to be blended, and only so-called short line segments can be treated. Accordingly, a processing such as finishing one continuous line segment while writing or correcting a plurality of input line segments of any length, long or short, as in an actual drawing on paper, is difficult.

Thus, even though many handwriting input systems have been proposed, they generally place emphasis on recognition of a figure, drawing or character, and do not provide an interface technique allowing line segments to be input with the feeling of handwriting on paper, which is in fact essential for interactive systems.

US Patent Application 5077802, issued December 31 1991, discloses an apparatus and method for digitising and segmenting handwriting movement. Significant parameters for verifying and recognising handwriting movement are provided.

European Patent Application 0377129, filed December 6 1989, discloses a fast spatial segmenter for handwritten characters. The method is recursive and operates by rapidly locating a general area in which two strokes might intersect and successively finds intersections until an exit condition is determined.

The present invention is directed to the technical problem of providing a computer input apparatus providing for a sketch-like free graphic input operation, in which a figure can be finished by long and short line segments being repeatedly written or overwritten using a process of trial and error.

In other words, the invention is directed to the provision of a computer input apparatus for automatically generating one appropriate line segment from a group of line segments which are overlapping or disconnected into short pieces, independently of the length or continuation of the line segments and reflecting the user's intention of drawing or the input state of strokes.

To solve this problem, the invention, as defined in claim 1, provides a computer apparatus supporting the input of sketch-like freehand graphics, said apparatus being responsive to user input operations to generate, for subsequent processing or display, data representing a line, and comprising a user input device for enabling a user to input data representing a current line segment via a drawing operation having one or more associated parameters; characterised by logic for generating a three-dimensional weighting function (Vf) from the input data and the parameters; logic for merging the generated weighting function with a stored weighting function generated from a previously input line segment, to generate a composite weighting function, said previously input line segment and the current line segment being in the same vicinity as one another; and logic for extracting data representing the line from the composite weighting function.

In accordance with this invention, stroke data is subjected to merge processing according to a plurality of variable parameters associated with the input device, and output as one line segment. In one embodiment, the input stroke data is projected onto a parameter space using weighting functions and spatially differentiated to extract the edge, and this edge is determined to be the line segment inputted by the user. If several short line segments are coexisting, a newly input stroke and the neighbouring already input stroke are integrated and processed as one stroke. This allows the operation between overlapping or connecting line segments to automatically be processed, whereby a paper-like interface can be implemented.

Another aspect of the invention is defined in claim 8. Further embodiments of the invention are specified in the dependent claims 2-7 and 9-11.

An embodiment of the invention will now be described by way of example only, with reference to the drawings, wherein:

Figure 1 is a diagram showing the general configuration of the handwriting input apparatus according to an embodiment of this invention

Figure 2 is a flowchart showing the flow of the processing in the handwriting input apparatus of Figure 1;

Figure 3 is a diagram showing the main portions of the handwriting input apparatus of Figure 1;

Figure 4 is a representation for explaining the weighting function Vf;

Figure 5 is a representation for explaining the global memory of Figure 3;

Figure 6 is a flowchart showing the details of the weighting process flow of Figure 2;

Figure 7 is a representation showing an example calculation of the weighting function Vf;

Figure 8 is a diagram showing an example of the edge detector;

Figure 9 is an illustration showing an example change of the characteristics of the weighting function;

Figure 10 is an illustration showing an example of automatically generating one curve from a sketch-like figure input;

Figure 11 is an illustration showing an example of the processing for making correction by overwriting another line segment on part of a line segment; and

Figure 12 is an illustration showing an example of automatically correcting a line segment which has been disconnected in the middle because of fast drawing.

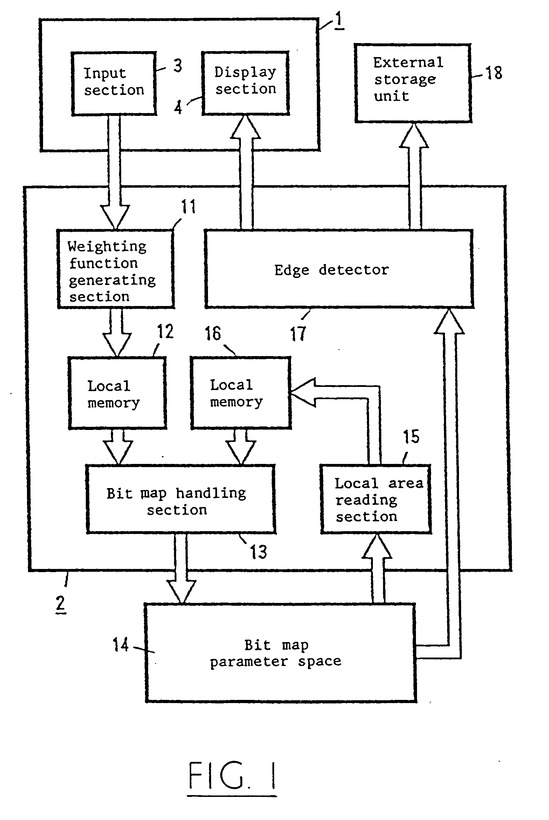

Figure 1 is a diagram showing the configuration of the input/output interface portion of the handwriting input apparatus according to an embodiment of this invention, which includes integrated input/output device 1 and processing section 2. Integrated input/output device 1 consists of a tablet with a liquid crystal display provided with input section 3 and output section 4. Input stroke data is weighted in the weighting function generating section 11 of processing section 2, developed as three-dimensional parameters into bit map data, and the result is held in local memory 12. Bit map operation section 13 performs an arithmetic processing of bit map data, and stores the result in the bit map parameter space of global memory area 14. The stroke data of the whole input screen is stored in global memory area 14.

Each time stroke data is newly inputted, data is read out from global memory area 14 by local area reading section 15 and held in local memory 16. For increasing the efficiency, only the stroke data in a local area in the vicinity of the newly input stroke is read out. In bit map handling section 13, an adding operation is performed between the bit map data held in both local memories 12 and 16, and the obtained result is again stored in global memory 14. 17 is an edge detector, which extracts the edge of three-dimensional bit map data and converts it to two-dimensional data, which is displayed on the liquid crystal display of output section 4 as a line drawing to be confirmed by the user. The two-dimensional line drawing is also recorded in memory 18 and utilized for graphic processing.

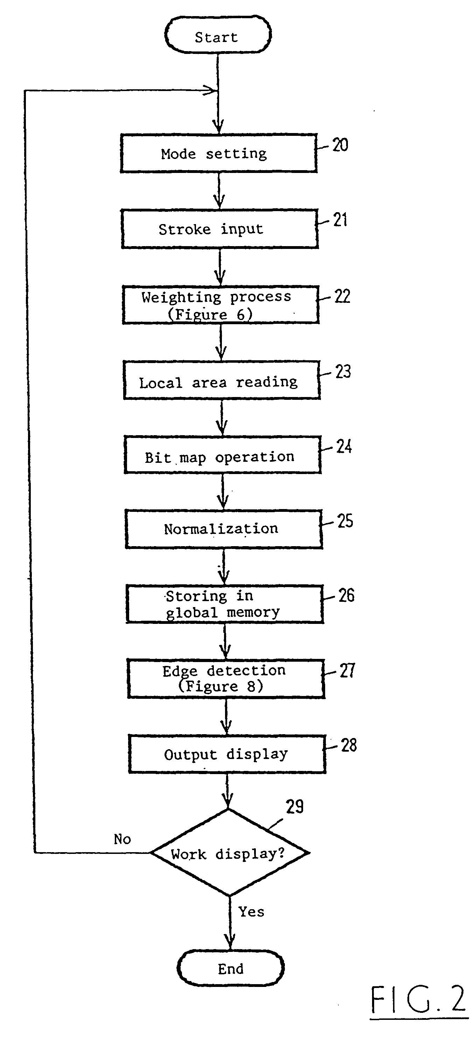

The flow of the processing of the handwriting input apparatus in Figure 1 is shown in Figure 2. First, the user sets the mode and decides roughness (step 20).

Stroke data inputted by handwriting with a pen is weighted in weighting function generating section 11, and a three-dimensional weighting function is generated as bit map data (step 22). Then, the bit map data of the weighting function in the vicinity of a newly input stroke is read out from global memory area 14 to local area reading section 15 (step 23). In bit map handling section 13, a bit map spatial operation is performed using both bit map data (step 24). The operation result is normalized (step 25) and stored in global memory area 14 (step 26). The three-dimensional weighting function in the global memory area is changed to two-dimensional parameters by a technique such as edge detection (step 27) and displayed as a line drawing in output section 4 (step 28). Subsequently, similar processing is repeated until the input work terminates (step 29).

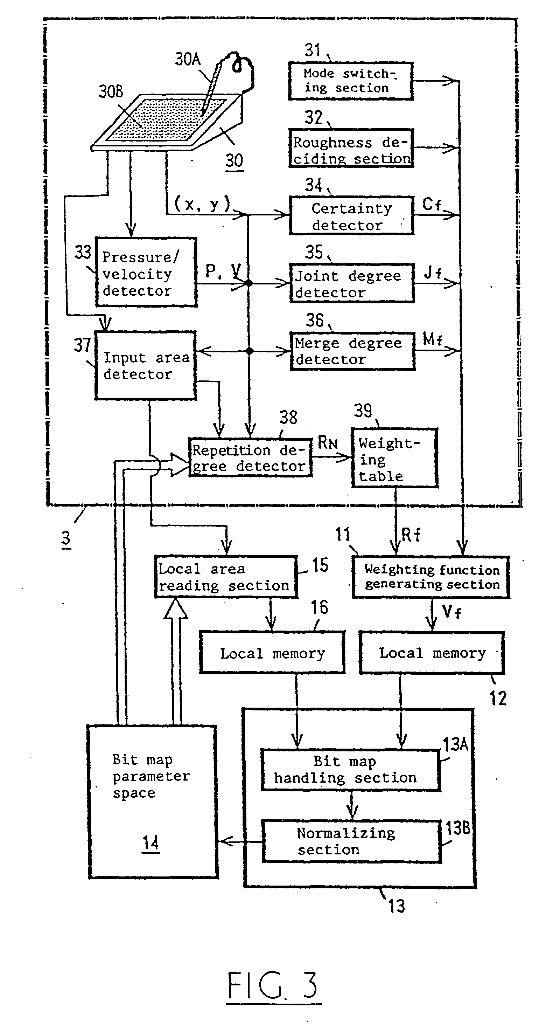

Figure 3 is a diagram showing the details of stroke input section 3 of Figure 1. 30 is a tablet with a liquid crystal display. The user contacts pen 30A with the liquid crystal display face 30B of the tablet and inputs a line drawing by handwriting. 31 is a mode switching section which is used by the user to specify the input mode of the line drawing. For instance, there are an "ADD" mode for writing a line segment, "REPLACE" mode for rewriting, and "ERASE" mode for erasure. 32 is a roughness deciding section, which specifies roughness of inputting of an objective figure when the user inputs a line drawing. 33 is a pressure/velocity detector, which detects the pen-stroke pressure $P(t)$ and input velocity $V(t)$ which the user draws and inputs a line segment (stroke data) SL.

$P(t)$:     Pen-stroke pressure at time t
$V(t)$:     Pen velocity at time t

As the means for detecting the pen-stroke pressure P, for instance, the tablet described in Japanese Patent Application JP 22 76 117/PN can be used. The input velocity V is calculated by dividing the distance between two points (SLn-1, SLn) of a line segment by the required time.

With positional information (x, y), pen-stroke pressure P(t) and input velocity V(t) of a line segment as inputs, certainty factor Cf, joint factor Jf and merge factor Mf are obtained in certainty detector 34, joint degree detector 35 and merge degree detector 36, respectively.

In addition, the number of times N of repeated input of a line segment SL is detected. That is, from the number of times N of repetition or overwriting in a certain local area obtained by input area detector 37 and repetition degree detector 38, the number of times of repetition RP(N) of a certain point AN is obtained and converted to repetition factor Rf with reference to weighting table 39.

In this way, each time a line segment SL is inputted, four information items of certainty factor Cf, joint factor Jf, merge factor Mf and repetition factor Rf are obtained in addition to position information (x, y) of the line segment SL. Weighting function generating section 11 performs a weighting processing (step 22 of Figure 2) on the basis of this information, the input roughness of a specified figure and the input mode, defining weighting function Vf.

Now, the weighting processing is described.

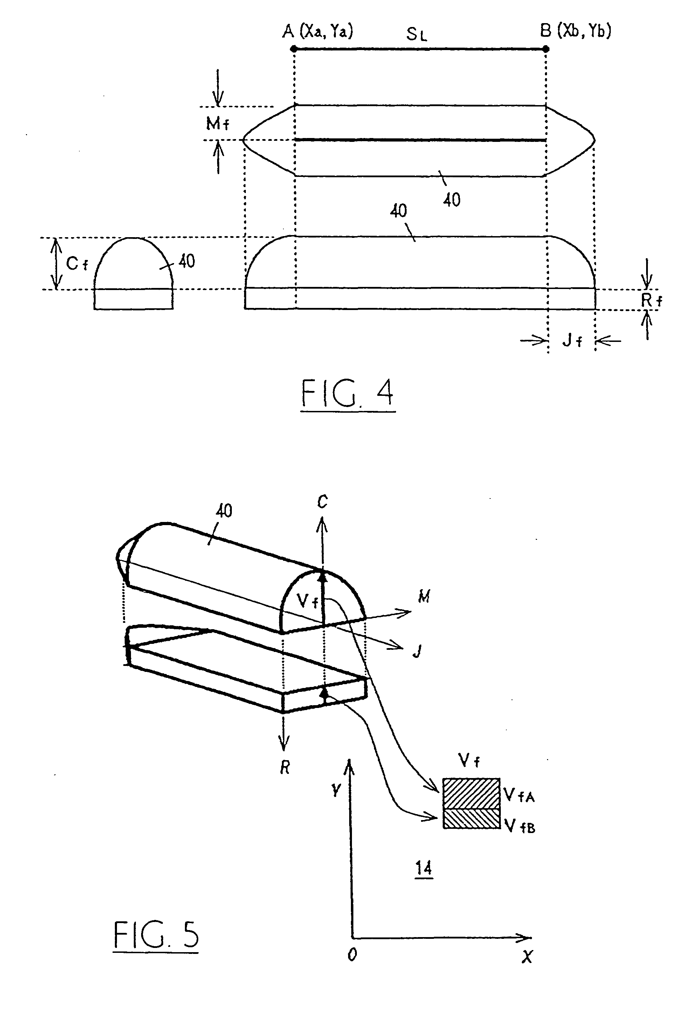

The weighting function Vf is a three-dimensional parameter which is generated from Certainty factor (Cf), Merge factor (Mf), Joint factor (Jf) and Repetition factor (Rf), as shown in Figure 4.

$$Vf\ (Cf,\ Mf,\ Jf,\ Rf)$$

Accordingly, the set of weighting functions Vf corresponding to the input line segment SL is expressed as mountain 40 which has the line segment as a ridge.

Certainty factor Cf is a parameter which shows whether the user is writing a line segment with certainty, and it depends on pen-stroke pressure P(t) and pen velocity V(t).

$$Cf = kc \times P(t)/V(t) \qquad (kc\ is\ a\ constant)$$

Instead of pen-stroke pressure, the certainty component may be detected from the power for grasping the pen, fluctuation of the stroke of the input line segment, or the like. Alternatively, the user may directly set the value of Cf which he inputs.

Merge factor Mf is a parameter which shows the strength with which the user writes a line segment SL, in other words, whether or not the user writes the line segment with emphasis, and depends on the stroke pressure P(t) of the pen.

$$Mf = km \times P(t) \qquad (km\ is\ a\ constant)$$

Joint factor Jf is a parameter which depends on pen velocity V(t).

$$Jf = kj \times V(t) \qquad (kj\ is\ a\ constant)$$

Usually, a fast written line segment may be disconnected or thin in the middle portion thereof, and it is desirable to complete one line segment by attaching importance to the connection relationship with other line segments on the prolonged line of a certain line segment direction. Conversely, it is preferred not to correct a line segment slowly drawn as in the case of carefully finishing details. Thus, joint factor Jf is a parameter which shows whether the user is writing a line segment roughly or densely, namely, the density of the input. This may be set by the user at the time of inputting.

Repetition factor Rf is a parameter which shows whether the user has intention to repeatedly write line segments. It is a factor which depends on the number of repetitions N of inputs in a local area and whether or not there is an already input line segment in the neighborhood of the line segment to be inputted.

Incidentally, it is assumed that repetition factor Rf is outputted only in the "ADD" mode to affect the weighting function Vf, and does not affect the weighting function Vf in the "REPLACE" mode.

$$Rf = kr \times R(N) \qquad (kr\ is\ a\ constant)$$

If the number of repetitions in a local area is N, as an example, it is assumed that weighting table 39 provides a relationship as shown in the following Table 1 between N and Rf.

Table 1

| N | 0 | 1 | 2 | 3 | 4 | 5 | 6 | 7 | 8 | 9 | -- |
|---|---|---|---|---|---|---|---|---|---|---|---|
| Rf | 1 | 3/2 | 1 | 2/3 | 1/2 | 1/3 | 1/4 | 1/8 | 1/8 | 1/8 | -- |
| RP(N) | 0 | 1 | 2 | 3 | 4 | 5 | 6 | 7 | 7 | 7 | -- |

In the example in Table 1, Rf becomes maximum for N=1, and decreases thereafter. That is, the effect by a newly input line segment decreases as the number of repetitions N increases. By this characteristic, it is possible to gradually correct an input line segment by overwriting. By previously defining RP(N) converted to integer values as in Table 1 instead of actual Rf, it is possible to simply record or read them out. Since, in this example, RP(N) takes a value of 0 to 7 according to the number of repetition N, it can be recorded in a 3-bit plane. If the user wants another characteristic, only the values in the table needed to be changed.

Repetition factor Rf uniformly affects the whole "local area" for each stroke input. The "local area" corresponds to the bottom surface of mountain 40 shown in Figure 4. This area can be obtained by calculation from the position information, joint factor Jf and merge factor Mf of the input line segment SL. Alternatively, it may be obtained by calculation as a set of areas of units into which liquid crystal display face 30B (or global memory area) is previously subdivided, or as an area within a fixed distance from each point of the input stroke for each input.

Now, the bit map parameter spaces of global memory area 14 for holding the data of weighting function Vf area described. The bit map parameter spaces X, Y correspond to two-dimensional coordinates (x, y) on input screen 30B, and the value projected to the neighboring parameter space when a certain section on the input screen is point A(Xa, Ya), point B(Xb, Yb) is a function value expressed by

$$Vf(x, y) = K (Xa, Ya, Xb, Yb, Cf, Mf, Jf, Rf).$$

As shown in Figure 5, weighting function data Vf is recorded in the parameter space, separately in the VfA area and VfB area.

$$Vf = VfA \times VfB$$

That is, the weighting function VfA corresponding to certainty factor Cf, merge factor Mf and joint factor Jf of each point and the weighting function VfB corresponding to repetition factor Rf are held in two areas in the bit map parameter space, respectively.

If weighting function data Vf is assumed to occupy an 8-bit parameter plane for one point, 5-bit and 3-bit planes can be assigned to VfA and VfB, respectively. Accordingly, it is possible to record the 8-tone values in Table 1 as repetition factor Rf. For instance, if eight bits are assigned to one point in a 640x480 VGA screen, the parameter space of global memory area 14 can be implemented by a memory of about 300 KBytes.

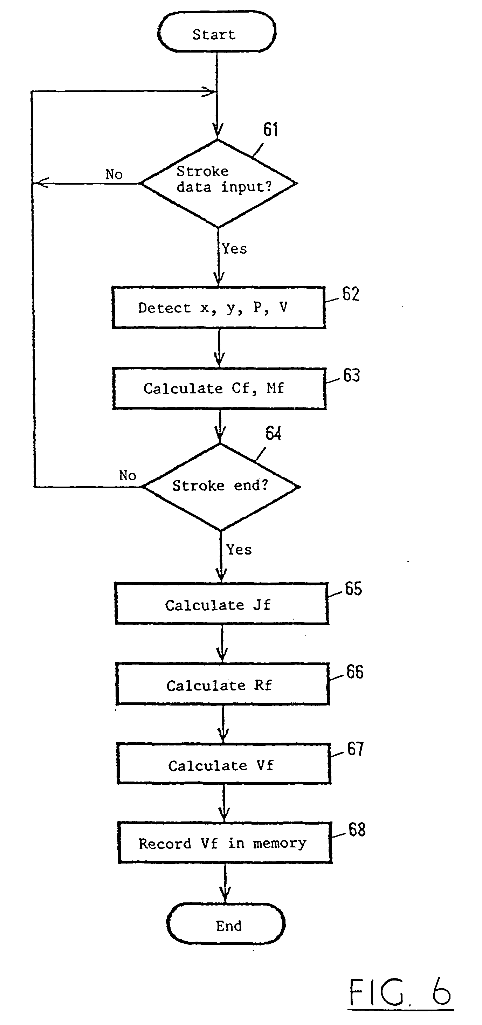

Figure 6 shows the flow of the weighting process. The input mode is assumed to be the "ADD" mode for writing line segments. First, the input line segment SL is input (step 61). As the input segment SL or stroke data, the pen-stroke pressure P(t) and pen velocity V(t) as well as position information (x, y coordinates) are detected at each input point AN of the line segment (step 62). Then, certainty factor Cf and merge factor Mf at input point AN are calculated as a function of the pen-stroke pressure P(t) and pen velocity V(t) (step 63). Subsequently, similar processing is repeated to each point from the start point or point A to the end point or point B of one line segment SL. If the pen-stroke pressure or pen velocity at each point varies during the inputting of stroke data from point A to point B, certainty factor Cf and merge factor Mf also naturally change for each input point.

After the input of a stroke is completed, then joint factors Jf before and after both ends A and B of the line segment are calculated as a function of the pen velocity V(t) (step 65).

Further, by input area detector 37 and repetition degree detector 38, the repetition factor Rf in the previous input in the same area (local area) held in the bit map parameter space is read out. The number of times of repetition N is increased by one, and a new repetition factor Rf value is obtained from weighting table 39 (step 66).

Then, weighting function Vf is calculated as a function of Cf, Mf, Jf and Rf obtained in each step described above (step 67), and the result is recorded in local memory area 12 (step 68).

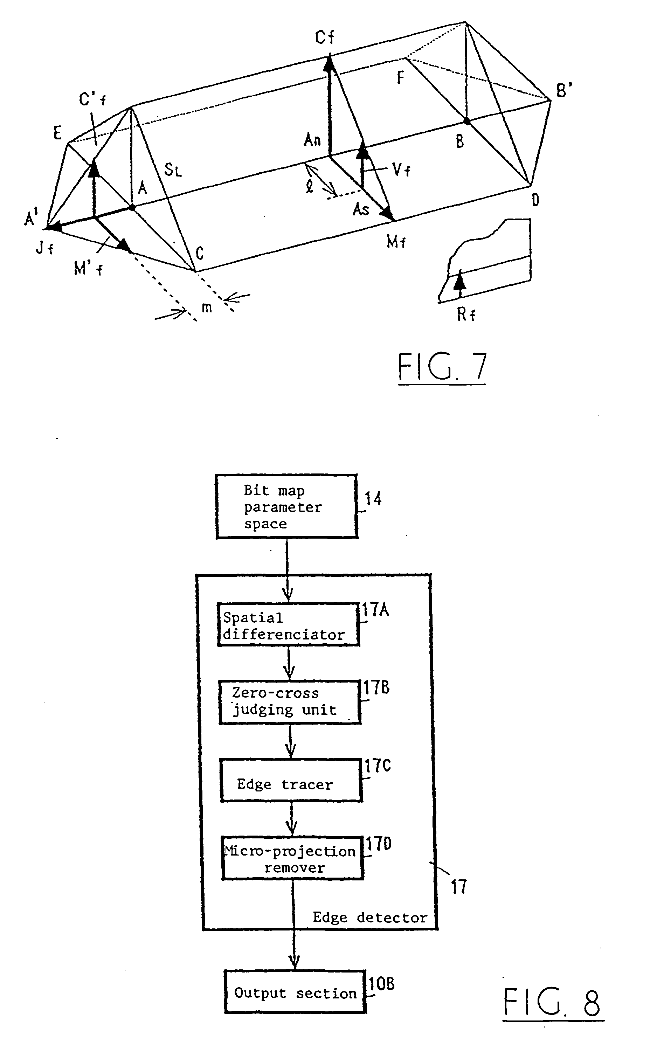

Figure 7 shows an example calculation of weighting function Vf. For the convenience of explanation, it is assumed that certainty factor Cf and repetition factor Rf are fixed between points A and B.

First, for the input segment SL having points A and B as both ends, the weighting function Vf value is calculated as a function of certainty factor Cf, merge factor Mf, repetition factor Rf and distance 1 for each point within the rectangular area having a width of 2Mf, namely, the area surrounded by points ACDBFE, as described below.

On the line segment AB, Vf = Rf x Cf. In addition, for point AS located as a position of distance 1 in the Mf direction from the line segment AB within the rectangular area, weighting function Vf is calculated as shown by the following equation.

$$Vf = Rf \times (Mf - 1) \times Cf/Mf$$

Further, the areas surrounded by triangles ACA'E and BDB'F before and after points A and B are subjected to a weighting process. That is, weighting function Vf in the triangular areas before and after points A and B is calculated as a function of certainty factor Cf, joint factor Jf, merge factor Mf and repetition factor Rf, as shown in the following equations.

First, for the area before point A, if the distance from point A in the Jf direction is assumed to be m, certainty factor Cf' on the AA' line is as follows.

$$Cf' = (Jr - m) \times Cf/Jf$$

Merge factor Mf' on the AA' line is as follows.

$$Mf' = (Jf - m) \times Mf/Jf$$

Accordingly, weighting function Vf of each point within the triangle ACA'E is as follows.

$$Vf = Rf \times (Mf' - 1) \times Cf'/Mf'$$

$$= Rf ((Jf - m) \times Mf/Jf) - 1) \times Cf/Mf$$

Weighting function Vf of each point within the triangle BDB'F after point B can also be obtained in a similar manner.

A newly drawn line segment affects the surrounding parameter values. After the weighting process, in bit map handling section 13, a bit map space operation is performed between the new stroke data and already input stroke data (Figure 2, step 24). That is, for each point AN of the newly input line segment SLN and the neighboring area, if there is bit data Vfn-1 for another already input line segment SLN-1, it is read into local area reading section 15 and an addition operation is performed with the bit data Vfn of the newly input line segment SLN in bit map handling section 13A. The added bit data is normalized in normalizing section 13B. Thus, for each stroke data input, the bit data Vfn of each point for the associated area is obtained and recorded (Figure 2, step 26).

That is, depending on the degree of the Euclidean distance between the newly input stroke SLn and the existing stroke SLn-1, there is no effect on the existing bit map data if the distance is large, and the bit map data is corrected if the distance is small.

Edge detection (Figure 2, step 27) is now described. In edge detector 17, bit map data which is a three-dimensional parameter is converted to a two-dimensional parameter, that is, the edge is detected, and output and displayed on output section 4 as a line figure. An example of edge detector 17 is shown in Figure 8. First, bit map data which is a three-dimensional parameter is spatially differentiated in spatial differentiator 17A, and the result is subjected to a zero-crossing judgement by zero-crossing judging means 17B and the zero-crossing point is traced by edge tracer 17C, whereby the edge is obtained. By removing micro-projections and disconnected line segments from the obtained edge by the use of micro-projection remover 17D or the like, whereby the objective line figure can be obtained. Thus, a three-dimensional parameter value is spatially differentiated and the zero-crossing is extracted as the edge, which is the output line of the line drawing drawn by the user. With this, even if a line segment continues intermittently short or short line segments are overwritten repeatedly, one smooth curve is obtained.

In addition, not only such output results, but also to visualize an invisible portion included in data, such as the range over which the effect of the line segment extends if it is roughly inputted, bit map data may be processed in a threshold value processing unit and the areas over the threshold value may be displayed.

Since the edge detection can be accomplished by the mask operation of the bit map, it can be rapidly processed by special hardware. The bit map operator unit can be implemented, for instance, by n x m mask operations (for simplicity, n=2, m=2 may be allowed).

As the edge trace algorithm, those usually used in image processing can be used. For instance, the techniques for detecting the boundary between a light area and a dark area in image processing include usual means such as primary differential, secondary differential, zero-crossing judgment and edge trace, but in this invention, the objective edge can be obtained by applying the secondary difference and the subsequent processings. (Reference: Computer Vision, written by Yoshiaki Shirai, Shokodo, p.24).

As described above, mountain 40 of a three-dimensional parameter reflecting the stroke input state is generated by appropriately selecting the characteristics of weighting function Vf. For instance, if the pen-stroke pressure P is small, by making certainty factor Cf and merge factor Mf small, and hence making the height of the mountain low and narrowing the width, the effect on other line segments can be reduced. In addition, if the input velocity of the pen is large, the effect on other line segments can be made large by making joint factor Jf large and widening the foot of the mountain in the extension direction of the line segment.

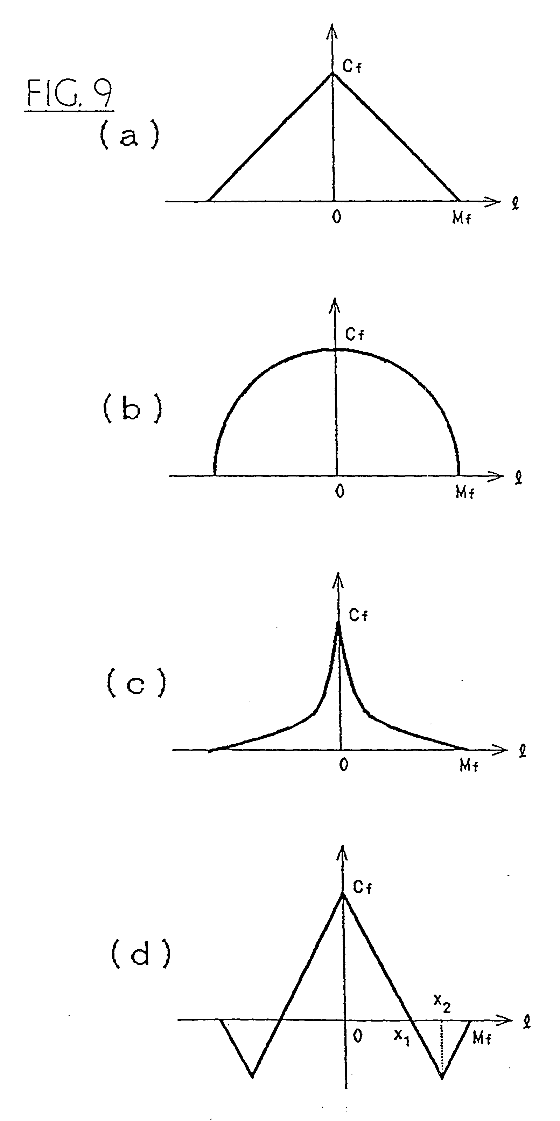

In this way, the user can set various characteristics for weighting function Vf. An example of changing the characteristics of weighting function is shown in Figure 9. Usually, it is a triangular mountain as shown in (a) of the figure (the same as that depicted in Figure 7), but if importance is attached to existing input data, the effect by certainty factor Cf is made small, that is, the vicinity of the top of the mountain is made to more gently change so as not to cut the top of an existing mountain in the vicinity of an input stroke as shown in (b). Conversely, if importance is attached to new data and a function such as to simply remove the data of the existing mountain, to make the effect by certainty factor Cf large, the characteristics are made such that the mountain peak becomes sharp as shown in (c) or (d).

In the case of (d),

(when $1 \leq x2$)

$$Vf = Rf \times Cf (1 - 1/x1)$$

(when $1 > x2$)

$$Vf = Rf \times Cf (1 - x2/x1) \times (Mf - 1)/(Mf - x2)$$

By changing the characteristics of the weighting function in this way, the shape of mountain 40 of a three-dimensional parameter for the stroke input state can freely be changed.

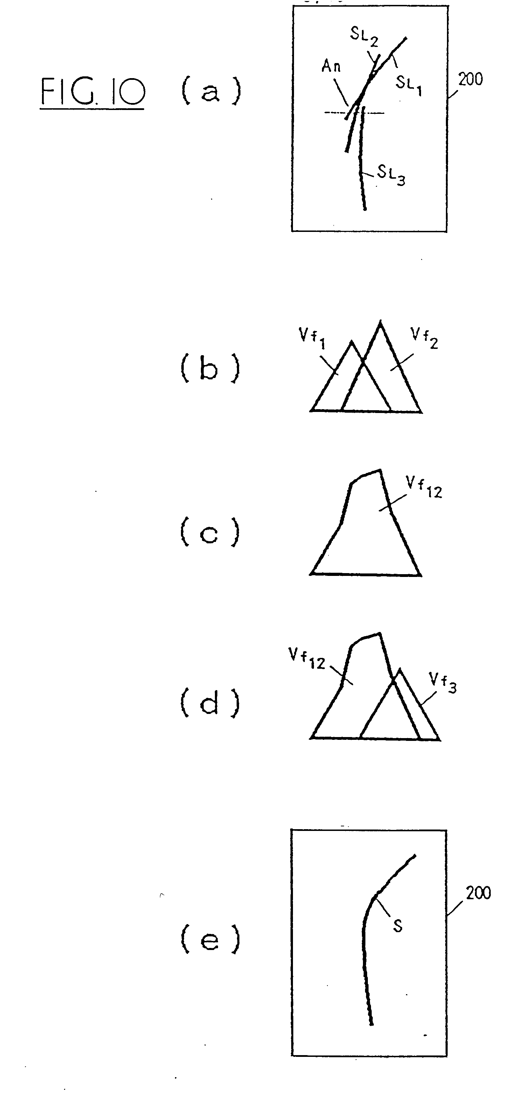

Figure 10 shows an example of a sketch-like graphic input, or of automatically generating one curve on the basis of an input operation such as of finishing a figure by repetitively drawing short line segments. In this case, the input is performed in the "ADD" mode. It is assumed that line segments SL1, SL2 and SL3 are input in this order in local area 200 as shown in (a) of the figure, and repetition factor Rf of each line segment depending on the number of repetitions is specified as shown in Table 1. First, the repetition factors Rf corresponding to the number of times of repetition N=0 and N=1 of line segments SL1 and SL2 are 1 and 3/2, respectively. Accordingly, for instance, the weighting functions Vfl and Vf2 of line segments SL1 and SL2 in the vicinity of point AN are as shown in (b) of the figure (the remaining conditions are assumed to be the same). The weighting function Vf12 after these are merged and normalized is as shown by (c). Then, the number of times of repetition N of line segment SL3 is 2, and the repetition factor Rf of the corresponding line segment is 1. Consequently, the relation between Vf12 obtained by merging line segments SL1 and SL2 and Vf3 corresponding to line segment SL3 is as shown by (d). By merging these to detect the edge, a new point is drawn. By applying such process to the whole area within local area 200, one continuous line segment S is obtained as shown in (e).

In addition, for reasons such as difference in the pen-stroke pressure in input or the line segment being located at a remote place of less interference, a plurality of unintended peaks or line segments may occur in the local area as a result of merging line segments SL1 and SL2. In such case, they may be erased by selecting the "ERASE" mode, but it may also be possible to enable one continuous line segment to be obtained by devising the input method of the next line segment SL3 without changing the state of the "ADD" mode. For instance, if line segment SL3 is slowly drawn with a large pen-stroke pressure P and a small pen velocity V, certainty factor Cf becomes large and unwanted peaks of line segments SL1 and SL2 are cancelled, whereby the desired line segment can be contained.

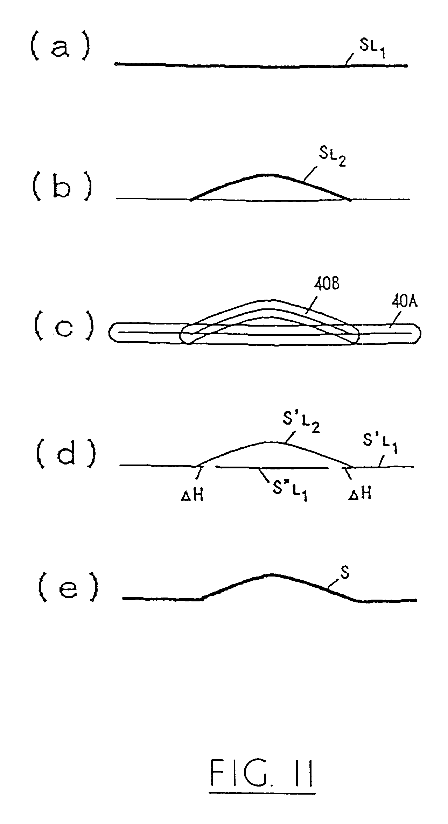

Figure 11 shows the processing for a case where correction is made by overwriting another line segment SL2 on part of a previously written line segment SL1. First, after drawing line segment SL1 in the "ADD" mode, the "REPLACE" mode is specified by edit mode switching section 32.

In this case, strong overwriting makes the certainty factor Cf of line segment SL2 great, and its mountain 40B has a shape of having a sharp peak portion and a low foot portion, as shown in (c) or (d) of Figure 9. Accordingly, if mountains 40A and 40B are added together and normalized in the bit map handling section, the vicinity of the intersection of line segments SL1 and SL2 becomes considerably low, and a mountain of a shape having a fairly low foot portion (having a groove position as the case may be) and a sharp peak portion is obtained. By performing edge detection for such mountain, the peak portion is detected, and as shown in (d) of the figure, continuous line segments SL1' + SL2' and discontinuous line segment SL1'' are obtained. When the "REPLACE" mode is specified, the disconnected and isolated line segment SL1'' is automatically deleted and replaced by line segment SL2'. Also, micro-projections ΔH are removed.

As a result, as shown in (e), one continuous line segment S, in which part of line segment SL1 is replaced by line segment SL2, is output as a stroke.

In addition, by setting the characteristics of certainty factor Cf or repetition factor Rf as needed, the intention of rewriting the line segment still in the "ADD" mode without specifying the "REPLACE" mode can also be accomplished to cancel the surrounding data.

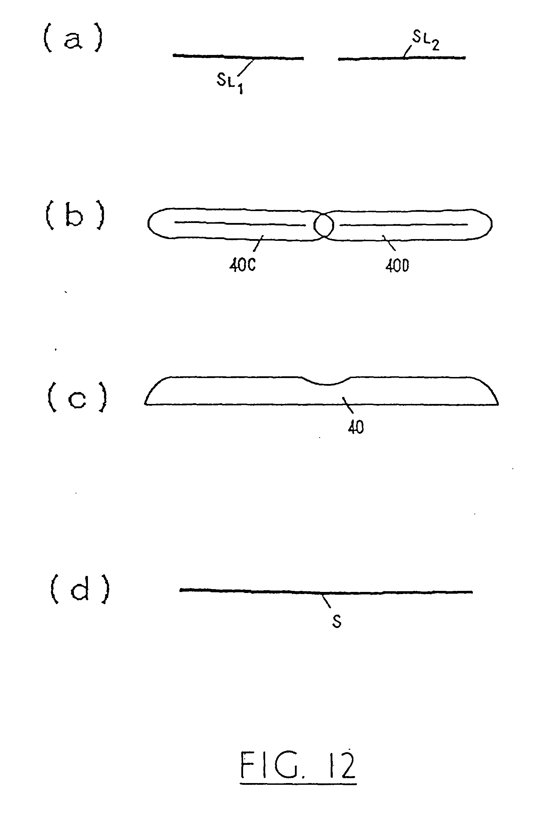

Then, an example of automatically correcting the data of a line segment by detection of the input state is shown in Figure 12. This example is to perform a correction process for two line segments SL1 and SL2, which have been disconnected at the middle portion because of very fast writing, as shown in (a). Since joint factor Jf becomes large if the pen velocity is large, the foot portions between mountains 40C and 40D of the two weighting functions corresponding to the two line segments SL1 and SL2 both widen and overlap with each other, as shown in (b) of the figure. In consequence, if the ridge of the merged mountain 40 is traced by edge detection as in (c), one line segment S like (d) is outputted.

Incidentally, if the user intends to draw the two line segments SL1 and SL2 as discontinuous two line segments, it is needless to say that they are only needed to be inputted at a slow speed.

Thus, the generation of weighting function Vf is to the user's intention for drawing or the stroke input state in a figure. The methods for detecting the input state and obtaining the weighting function Vf are not limited to those described in the embodiment, but any other methods or combination of them may be used as long as they can convert the input state and parameters into a suitable three-dimensional weighting function.

In accordance with this invention, input stroke data is projected onto a parameter space by a weighting function, and spatially differentiated to detect the edge, which is deemed to be the curve inputted by the user. Although stroke data is vector data, by giving certainty factor and the like to this, this is treated after being developed into bit map data. This can simplify the operation between input line segments which are overlapping or connecting. In addition, even if several short line segments are coexisting, the strokes in the vicinity of a newly input stroke are processed as one integrated stroke.

Further, in accordance with this invention, there is a merit that, by normalizing and outputting the parameter space for each stroke input, the user can input line segments while he is interactively carrying out verification. Also in connecting short line segments, the result can be fed back on a real-time basis, and thus the user can input while comparing and confirming his drawing intention with the actual figure.

There has been described a handwriting input method for detecting the data of a stroke drawn with a pen on the input/output screen of a handwriting input apparatus provided with an input section, processing section, memory section and output section, performing an arithmetic processing based on said stroke data in said processing section to generate a line segment, and recording the data of said line segment in a memory and displaying it on said screen, said method comprising the steps of: detecting the pen-stroke pressure P and pen velocity V at each input point AN of said stroke, obtaining, by calculation, certainty factor Cf and merge factor Mf at said each input point AN as a function of said pen-stroke pressure P and pen velocity V, upon completion of the inputting of said stroke, obtaining, by calculation, joint factor Jf before and after both ends of said input line segment as a function of said pen velocity V, reading out the data corresponding to repetition factor Rf among the weighting function in the same area for the previous Input which is held in said memory, obtaining the value of repetition factor Rf when the number of times of repetition N is increased by one, obtaining, by calculation, a three-dimensional weighting function Vf as a function of said Cf, Mf, Jf and Rf obtained in the above respective steps, normalizing and storing the bit map data of said weighting function Vf in said memory, and converting said bit map data to two-dimensional parameters by edge detection thereby to generate a line segment, and displaying it on said screen.

There has been further described a handwriting input apparatus for detecting the data of a stroke drawn on an input screen by a user with a pen, and generating a line segment based on said stroke data, said apparatus comprising: means for extracting the input state of said stroke as a plurality of variable parameters, means for generating a three-dimensional weighting function on the basis of said plurality of variable parameters, means for merging said weighting function with the weighting function of an already input line segment to generate a new weighting function, and means for extracting a line segment from said new weighting function.

In other words a handwriting input apparatus has been described for detecting the data of a stroke drawn on the screen of an input/output section by a user with a pen, generating a line segment based on said stroke data in a processing section, and recording it in a memory, said input section including a detecting section for extracting the input state of said stroke as a plurality of variable parameters based on the stroke pressure, velocity and number of times of repetition of said pen, and said processing section including: a weighting function generating section for generating a three-dimensional weighting function on the basis of said plurality of variable parameters, a local area reading section for reading out the weighting function of an already input line segment in a local area in the vicinity of said input stroke from said memory, a bit map handling section for adding said two weighting functions to generate a new weighting function, and recording it in said memory, and an edge detecting section for detecting the edge of said new weighting function to extract a line segment, and outputting and displaying it on said screen.

More specifically, a handwriting input apparatus has been described for detecting the data of a stroke drawn on the input section of a tablet by a user with a pen, generating a line segment based on said stroke data in a processing section, and recording it in a memory and displaying it on the output section of said tablet, said input section including detecting means for detecting input state amounts for each point of said input stroke, and said processing section including: weighting function generating section for applying a weighting process to said input state amounts to generate stroke data converted to three-dimensional parameters as a weighting function, a local area reading section for reading out the already input stroke data in a local area in the vicinity of said input stroke from said memory, a bit map handling section for performing bit map space operation to add said two stroke data, and recording the obtained three-dimensional parameter data in said memory, and an edge detecting section for performing edge detection of said three-dimensional parameter data to convert it to two-dimensional parameters and displaying it as a line segment on said output section, wherein said detecting means detects the pen-stroke pressure P, input velocity V and number of times of repetitive inputs N in said local area when said line segment is drawn by a pen in addition to the coordinate values of the line segment, and for performing the conversion from said input state amounts P, V and N to three-dimensional parameters, said detecting means includes: a certainty detector for obtaining certainty factor Cf as a parameter showing whether the user is writing a line segment with certainty by a relation of $Cf = kc \times P/V$ (kc is a constant), a merge degree detector for obtaining merge factor Mf as a parameter showing the strength with which the user writes a line segment by a relation of $Mf = km \times P$ (km is a constant), a joint degree detector for obtaining joint factor Jf as a parameter showing the density of the user input by a relation of $Jf = kj \times V$ (kj is a constant), and an input area detector and repetition degree detector for obtaining repetition factor Rf as a parameter showing whether the user has intention of repeatedly drawing line segments by a relation of $Rf = kr \times R(N)$ (kr is a constant), and in said weighting function generating section, said weighting function Vf is generated from said certainty factor Cf, joint factor Jf, merge factor Mf and repetition factor Rf. The number of times N said line segment SL has been repeatedly input in said local area is detected by said input area detector, and the number of times of repetition RP(N) of a certain point AN is obtained from said number of times N by said repetition degree detector and converted to a repetition factor Rf with reference to a weighting table.

In accordance with this invention, in handwriting input, it is made possible to freely input a sketch-like figure.

In addition, a handwriting input apparatus is obtained for automatically generating proper line segments reflecting the user's drawing intention or the stroke input state.

## Claims

1. Computer apparatus supporting the input of sketch-like freehand graphics, said apparatus being responsive to user input operations to generate, for subsequent processing or display, data representing a line, and comprising a user input device (1, 30) for enabling a user to input data representing a current line segment via a drawing operation having one or more associated parameters;
characterised by logic (11) for generating a three-dimensional weighting function (Vf) from the input data and the parameters;

   logic (13) for merging the generated weighting function with a stored weighting function generated from a previously input line segment, to generate a composite weighting function, said previously input line segment and the current line segment being in the same vicinity as one another; and
   logic (17) for extracting data representing the line from the composite weighting function.

2. Computer apparatus as claimed in claim 1 wherein the weighting functions (Vf) are surfaces having a ridge (40) substantially at the position of the current line segment, the profile of the ridge depending on the value of the parameters.

3. Computer apparatus as claimed in claim 1 or claim 2 comprising a bit map storage device (14) for storing the composite weighting function, the merging logic (13) comprising logic for adding the weighting function generated from the input data to a portion of the composite weighting function in the vicinity of the current line segment and storing the result in the bit map storage device (14).

4. Computer apparatus as claimed in any preceding claim wherein the composite line segment data is extracted from the composite weighting function by spatially differentiating the composite weighting function and detecting an edge in the result of the differentiation.

5. Computer apparatus as claimed in any preceding claim wherein the user input device comprises means (33, 34, 35, 36, 38) for detecting one or more characteristics of the drawing operation and setting the parameters in accordance therewith.

6. Computer apparatus as claimed in any preceding claim wherein the user input device (30) comprises a pen (30A) and a 2-D tablet (30B), the device being responsive to movement of the pen over a surface of the tablet to enable the user to effect input of a line segment.

7. Computer apparatus as claimed in claim 6 as dependent on claim 5 wherein the characteristics are pen-stroke pressure P, pen velocity V and a number of times N of repetitive input in a local area and wherein the parameters are:

   a certainty factor Cf showing whether the user is writing the line segment with certainty, where $Cf = Kc \times P/V$;

   a merge factor Mf showing the strength with which the user writes a line segment, where $Mf - Km \times P$;

   a joint factor Jf showing the density of the user input, where $Jf = Kj \times V$;

   a repetition factor Rf showing whether the user has intention of repeatedly writing a line segment where $Rf = Kr \times R(N)$, where Kc, Km, Kj and Kr are constants.

8. A method for the input of sketch-like freehand graphics, for detecting the data of a stroke drawn on a screen by a user with a pen, and generating a line segment in a processing section on the basis of said stroke data, said method comprising steps of:

   extracting the input state of said stroke as a plurality of variable parameters, and characterised by:

   generating a three-dimensional weighting function on the basis of said plurality of variable parameters,

   adding and merging said weighting function and the weighting function of an already input line segment in the vicinity of said stroke, to generate a new weighting function, and

   extracting a line segment from said new weighting function.

9. A method as claimed in claim 8, wherein the data of said line segment is recorded in a memory area to display the line segment on said screen, further comprising the steps of:

   recording said new weighting function in said memory area, and

   detecting the edge of said new weighting function to extract said line segment and outputting it to said screen.

10. A method as claimed in claim 9, wherein the step of extracting the input state of said pen-stroke comprises detecting the pen-stroke pressure P, pen velocity V and number of times N of repetitive input in a local area, and converting these P, V and N to said plurality of variable parameters.

11. A method as claimed in claim 10 wherein, in the step of converting said P, V and N to said plurality of parameters,

   certainty factor Cf as a parameter showing whether the user is writing a line segment with certainty is calculated by a relation of $Cf = kc \times P/V$ (kc is a constant),

   merge factor Mf as a parameter showing the strength with which the user writes a line segment is calculated by a relation of $Mf = km \times P$ (km is a constant),

   jointfactor Jf as a parameter showing density of the user input is calculated by a relation of $Jf = kj \times V$ (kj is a constant), and

repetition factor Rf as a parameter showing whether the user has intention of repeatedly writing a line segment is calculated by a relation of Rf = kr x R(N) (kr is a constant), and

in the step of generating a new weighting function,

said three-dimensional weighting function Vf is generated from said certainty factor Cf, joint factor Jf, merge factor Mf and repetition factor Rf.

**Patentansprüche**

1. Computervorrichtung, die die Eingabe skizzenhaften Freihandzeichnungen unterstützt, wobei die Vorrichtung auf Benutzereingabeoperationen, für nachfolgende Bearbeitung oder Darstellung, zur Erzeugung von Daten, die eine Linie darstellen, reagiert, und eine Benutzereingabeeinrichtung (1, 30) umfasst, das einen Benutzer die Eingabe von Daten, die ein aktuelles Liniensegment darstellen, mittels einer Zeichenoperation ermöglicht, die einen oder mehrere dazugehörige Parameter hat;
gekennzeichnet durch Logik (11) zur Erzeugung einer dreidimensionalen Gewichtungsfunktion (Vf) aus den Eingabedaten und den Parametern;

Logik (13) zur Mischung der erzeugten Gewichtungsfunktion mit einer gespeicherten Gewichtungsfunktion, die aus einem vorherigen Eingabeliniensegment erzeugt wurde, um eine zusammengesetzte Gewichtungsfunktion zu erzeugen, wobei das vorherige Eingabeliniensegment und das aktuelle Liniensegment sich beide in der gleichen Umgebung befinden; und
Logik (17) zur Extrahierung von Daten, die die Linie aus der zusammengesetzten Gewichtungsfunktion darstellen.

2. Computervorrichtung gemäß Anspruch 1, worin die Gewichtungsfunktionen (Vf) Flächen mit einem Kamm (40) im Wesentlichen an der Stelle des aktuellen Liniensegments sind und das Profil des Kamms von dem Wert der Parameter abhängt.

3. Computervorrichtung gemäß Anspruch 1 oder 2, die eine Bitmap-Speichereinrichtung (14) zur Speicherung der zusammengesetzten Gewichtungsfunktion umfasst, die Mischlogik (13), die Logik zur Addition der Gewichtungsfunktion, die aus den Eingabedaten erzeugt wurde, zu einem Teil der zusammengesetzten Gewichtungsfunktion in der Umgebung des aktuellen Liniensegments, umfasst und Speichern des Ergebnisses in der Bitmap-Speichereinrichtung (14).

4. Computervorrichtung gemäß einem oder mehreren vorangehenden Ansprüchen, worin die zusammengesetzten Liniensegmentdaten aus der zusammengesetzten Gewichtungsfunktion durch räumliche Differenzierung der zusammengesetzten Gewichtungsfunktion extrahiert und eine Kante im Ergebnis der Differenzierung bestimmt wird.

5. Computervorrichtung gemäß einem oder mehreren vorangehenden Ansprüchen, worin die Benutzereingabeeinrichtung Mittel (33, 34, 35, 36, 38) zur Bestimmung einer oder mehrerer Eigenschaften der Zeichenoperation und Einstellung der damit in Einklang stehenden Parameter umfasst.

6. Computervorrichtung gemäß einem oder mehreren vorangehenden Ansprüchen, worin die Benutzereingabeeinrichtung (30) einen Stift (30A) und ein zweidimensionales Tablett (30B) umfasst, das Tablett auf die Bewegung des Stifts über eine Oberfläche des Tabletts reagiert, um dem Benutzer die Eingabe eines Liniensegments zu ermöglichen.

7. Computervorrichtung gemäß Anspruch 6, abhängig von Anspruch 5, worin die Eigenschaften Stiftstrichdruck P, Stiftgeschwindigkeit V und Anzahl N wiederholter Eingabe in einem lokalen Bereich sind und worin die Parameter wie folgt sind:

Sicherheitsfaktor Cf, der anzeigt, ob der Benutzer das Liniensegment mit Sicherheit schreibt, wobei Cf = Kc x P/V;

Mischfaktor Mf, der die Stärke anzeigt, mit der der Benutzer ein Liniensegment schreibt, wobei Mf = Km x P;

Verbindungsfaktor Jf, der die Dichte der Benutzereingabe zeigt, wobei Jf = Kj x V;

Wiederholungsfaktor Rf, der anzeigt, ob der Benutzer die Absicht hat, ein Liniensegment wiederholt zu schreiben,

wobei Rf = Kr x R(N) und wobei Kc, Km, Kj und Kr Konstanten sind.

8. Verfahren zur Eingabe einer skizzenhaften Freihandzeichnung, zur Bestimmung der Daten eines Strichs, der auf einer Anzeige von einem Benutzer mit einem Stift gezeichnet wird, und Erzeugung eines Liniensegments in einem Verarbeitungsabschnitt auf Grundlage der Strichdaten, wobei das Verfahren die folgenden Schritte umfasst:

Extraktion des Eingabezustands des Strichs als eine Vielzahl variabler Parameter, und gekennzeichnet durch:

Erzeugen einer dreidimensionalen Gewichtungsfunktion auf Grundlage der Vielzahl von variablen Parametern,

Addieren und Mischen der Gewichtungsfunktion und der Gewichtungsfunktion eines bereits eingegebenen Liniensegments in der Umgebung des Strichs, um eine neue Gewichtungsfunktion zu erzeugen, und

Extraktion eines Liniensegments aus der neuen Gewichtungsfunktion.

9. Verfahren gemäß Anspruch 8, worin die Daten des Liniensegments in einem Speicherbereich zur Anzeige des Liniensegments auf der Anzeige aufgezeichnet werden, das des Weiteren die folgenden Schritte umfasst:

Aufzeichnung der neuen Gewichtungsfunktion im Speicherbereich, und

Bestimmung der Kante der neuen Gewichtungsfunktion, um das Liniensegment zu extrahieren und es auf der Anzeige auszugeben.

10. Verfahren gemäß Anspruch 9, worin der Schritt der Extraktion des Eingabezustands des Stiftstrichs die Bestimmung des Stiftstrichdrucks P, Stiftgeschwindigkeit V und Anzahl N von wiederholter Eingabe in einem lokalen Bereich umfasst, und diese P, V und N zu der Vielzahl von variablen Parametern konvertiert.

11. Verfahren gemäß Anspruch 10, worin im Schritt der Konvertierung von P, V und N zu der Vielzahl von Parametern

Sicherheitsfaktor Cf als ein Parameter, der anzeigt, ob der Benutzer ein Liniensegment mit Sicherheit schreibt, durch eine Relation von Cf = kc x P/V (kc ist eine Konstante), berechnet wird,

Mischfaktor Mf als ein Parameter, der die Stärke, mit der der Benutzer ein Liniensegment schreibt, durch eine Relation
Mf = km x P (km ist eine Konstante) berechnet wird,

Verbindungsfaktor Jf als ein Parameter, der die Dichte der Benutzereingabe anzeigt, durch eine Relation Jf = kj x V
(kj ist eine Konstante) berechnet wird,

Wiederholungsfaktor Rf als ein Parameter, der anzeigt, ob der Benutzer die Absicht hat, ein Liniensegment wiederholt zu schreiben, durch eine Relation Rf = kr x R(N)
(kr ist eine Konstante) berechnet wird, und

im Schritt der Erzeugung einer neuen Gewichtungsfunktion,

die dreidimensionale Gewichtungsfunktion Vf aus dem Sicherheitsfaktor Cf, Verbindungsfaktor Jf, Mischfaktor Mf und Wiederholungsfaktor Rf erzeugt wird.

**Revendications**

1. Appareil pour ordinateur supportant l'entrée de graphiques sous la forme de croquis faits à main levée, ledit appareil répondant aux opérations d'entrée de l'utilisateur pour créer, en vue de traitements ou d'un affichage ultérieur, des données représentant une ligne, et comprenant un dispositif d'entrée utilisateur (1, 30) permettant à un utilisateur d'entrer des données représentant un segment de ligne courant par le biais d'une action de dessin et auxquelles sont associés un ou plusieurs paramètres ;
caractérisé par une logique (11) pour générer une fonction de pondération tridimensionnelle (Vf) à partir des données d'entrée et des paramètres ;

   une logique (13) pour fusionner la fonction de pondération générée avec une fonction de pondération enregistrée, générée à partir d'un segment de ligne entré précédemment, afin de générer une fonction de pondération mixte, ledit segment de ligne entré précédemment et le segment de ligne courant se trouvant proches l'un de l'autre ; et

   une logique (17) pour extraire de la fonction de pondération mixte les données représentant la ligne.

2. Appareil pour ordinateur selon la revendication 1, où les fonctions de pondération (Vf) sont des surfaces dont une crête (40) occupe en substance la position du segment de ligne courant, le profile du bord dépendant de la valeur des paramètres.

3. Appareil pour ordinateur selon la revendication 1 o la revendication 2, comprenant un dispositif de mémoire de mappe binaire (14) pour enregistrer la fonction de pondération mixte, la logique de fusion (13) comprenant une logique pour ajouter la fonction de pondération générée à partir des données d'entrée à une partie de la fonction de pondération mixte qui est à proximité du segment de ligne courant et enregistrer le résultat dans le dispositif de stockage de mappe binaire (14).

4. Appareil pour ordinateur selon l'une quelconque des revendications précédentes où les données du segment de ligne composite sont extraites à partir de la fonction de pondération mixte en différentiant dans l'espace la fonction de pondération mixte et en détectant un bord dans le résultat de la différentiation.

5. Appareil pour ordinateur selon l'une quelconque des revendications précédentes où le dispositif d'entrée utilisateur comprend des moyens (33, 34, 35, 36, 38) pour détecter une ou plusieurs caractéristiques de l'opération de dessins et régler les paramètres en conséquence.

6. Appareil pour ordinateur selon l'une quelconque des revendications précédentes où le dispositif d'entrée utilisateur (30) comprend un stylet (30A) et une tablette 2D (30B), le dispositif répondant aux déplacements du stylet sur une surface de la tablette pour permettre à l'utilisateur d'entrer un segment de ligne.

7. Appareil pour ordinateur selon la revendication 6 dépendant de la revendication 5, où les caractéristiques sont la pression P des traits de crayon, la vitesse V du stylet et le nombre N d'entrées répétées dans une zone locale et où les paramètres sont :

   un facteur de conviction Cf montrant si l'utilisateur trace le segment de ligne avec conviction, où $Cf = Kc \times P/V$ ;

   un facteur de fusion Ff montrant la force avec laquelle l'utilisateur trace un segment de ligne, où $Ff = Km \times P$ ;

   un facteur de réunion Jf montrant la densité de l'entrée de l'utilisateur, où $Jf = Kj \times V$ ;

   un facteur de répétition Rf montrant si l'utilisateur a l'intention de tracer de manière répétée un segment de ligne, où $Rf = Kr \times R (N)$, où Kc, Km, Kj et Kr sont des constantes.

8. Méthode pour entrer des graphiques réalisés à la main de type croquis, pour détecter les données d'un trait tracé sur un écran avec un stylet par un utilisateur, et générant dans une section de traitement un segment de ligne sur la base des dites données du trait, ladite méthode comprenant les phases qui consistent à :

   extraire l'état d'entrée dudit trait sous la forme d'une pluralité de paramètres variables, et caractérisée par :

créer une fonction de pondération tridimensionnelle basée sur ladite pluralité de paramètres variables,

ajouter et fusionner ladite fonction de pondération et la fonction de pondération d'un précédent segment de ligne à proximité dudit trait, afin de générer une nouvelle fonction de pondération, et

extraire un segment de ligne à partir de ladite nouvelle fonction de pondération.

9. Méthode selon la revendication 8, dans laquelle les données dudit segment de ligne sont enregistrées dans une zone de mémoire pour afficher le segment de ligne sur ledit écran, comprenant en outre les phases suivantes :

enregistrer ladite nouvelle fonction de pondération dans ladite zone de mémoire, et

détecter le bord de ladite nouvelle fonction de pondération pour extraire ledit segment de ligne et le sortir sur ledit écran.

10. Méthode selon la revendication 9, dans laquelle la phase d'extraction de l'état d'entrée dudit trait de stylet comprend la détection de la pression du trait P, de la vitesse du stylet V et du nombre N d'entrée répétitive dans une zone locale, et la conversion de ces P, V et N en ladite pluralité de paramètres variables.

11. Méthode selon la revendication 10 dans laquelle, dans la phase de conversion des dits P, V et N en lesdits paramètres variables,

un facteur de conviction $Cf$ est calculé en tant que paramètre montrant si l'utilisateur trace un segment de ligne avec conviction par la relation $Cf = Kc \times PN$ ($Kc$ étant une constante) ;

un facteur de fusion $Ff$ est calculé comme paramètre montrant la force avec laquelle l'utilisateur trace un segment de ligne, par la relation $Ff = Km \times P$ ($Km$ étant une constante) ;

un facteur de réunion $Jf$ est calculé en tant que paramètre montrant la densité de l'entrée de l'utilisateur, par la relation $Jf = Kj \times V$ ($Kj$ étant une constante), et

un facteur de répétition $Rf$ est calculé en tant que paramètre montrant si l'utilisateur a l'intention de répéter le tracé d'un segment de ligne, par la relation $Rf = Kr \times R (N)$, ($Kr$ est une constante), et

dans la phase qui consiste à générer une nouvelle fonction de pondération,

ladite fonction de pondération tridimensionnelle $Vf$ est créée à partir desdits facteur de conviction $Cf$, facteur de réunion $Jf$, facteur de fusion $Ff$ et facteur de répétition $Rf$.

FIG. 1

```
              ┌─────────┐
              │  Start  │
              └─────────┘
                   │
    ┌──────────────┼
    │              ▼
    │        ┌──────────────────┐
    │        │   Mode setting   │──── 20
    │        └──────────────────┘
    │              │
    │              ▼
    │        ┌──────────────────┐
    │        │   Stroke input   │──── 21
    │        └──────────────────┘
    │              │
    │              ▼
    │        ┌──────────────────┐
    │        │ Weighting process│──── 22
    │        │   (Figure 6)     │
    │        └──────────────────┘
    │              │
    │              ▼
    │        ┌──────────────────┐
    │        │ Local area reading│──── 23
    │        └──────────────────┘
    │              │
    │              ▼
    │        ┌──────────────────┐
    │        │ Bit map operation│──── 24
    │        └──────────────────┘
    │              │
    │              ▼
    │        ┌──────────────────┐
    │        │  Normalization   │──── 25
    │        └──────────────────┘
    │              │
    │              ▼
    │        ┌──────────────────┐
    │        │   Storing in     │──── 26
    │        │  global memory   │
    │        └──────────────────┘
    │              │
    │              ▼
    │        ┌──────────────────┐
    │        │  Edge detection  │──── 27
    │        │   (Figure 8)     │
    │        └──────────────────┘
    │              │
    │              ▼
    │        ┌──────────────────┐
    │        │  Output display  │──── 28
    │        └──────────────────┘
    │              │
    │              ▼     29
    │            ◇─────────◇
    │   No      ╱  Work     ╲
    └──────────◇  display?   ◇
               ╲            ╱
                ◇─────────◇
                   │ Yes
                   ▼
              ┌─────────┐
              │   End   │
              └─────────┘
```

FIG.2

FIG. 3

FIG. 4

FIG. 5

FIG. 6

FIG. 7

FIG. 8

FIG. 9

(a)

(b)

(c)

(d)

FIG. 10  ( a )

( b )

( c )

( d )

( e )

( a ) $SL_1$

( b ) $SL_2$

( c ) 40B 40A

( d ) $S'L_2$ $S'L_1$ $\Delta H$ $S''L_1$ $\Delta H$

( e ) S

FIG. II

( a )                      $SL_2$

                    $SL_1$

( b )

            40C              400

( c )

                    40

( d )

                    S

FIG. 12